# EUROPEAN PATENT APPLICATION

(11) **EP 4 539 402 A1**
(43) Date of publication of application: **16.04.2025**
(21) Application number: 23844979.7
(22) Date of filing: 10.05.2023
(51) Int. Cl.: H04L 12/46

(54) **ROUTING FORWARDING METHOD, ELECTRONIC DEVICE AND STORAGE MEDIUM**

(30) Priority: 25.07.2022 CN 202210878225
(71) Applicant: ZTE Corporation, Shenzhen, Guangdong 518057 (CN)
(72) Inventor: LIN, Ning, Shenzhen, Guangdong 518057 (CN)
(74) Representative: Aipex B.V.
(86) International application number: PCT/CN2023/093299
(87) International publication number: WO 2024/021764

(57) **Abstract**

Provided are a routing forwarding method, an electronic device, and a storage medium. The method includes determining an input direction of a packet and in response to determining that the input direction is a tunnel side, setting an egress of the packet to a local egress. Circular forwarding through the tunnel egress and the local egress solves the problem of the forwarding loop between the remote tunnel and the local end, reducing transmission path errors of network packets, improving network robustness, improving network communication quality, and improving user experience.

## Description

### TECHNICAL FIELD

The present application relates to the field of communication technology and, in particular, to a routing forwarding method, an electronic device, and a storage medium.

### BACKGROUND

Equal-cost multi-path (ECMP) routing is a routing strategy that calculates the primary routing weight when multiple optimal paths are juxtaposed when the next-hop packet is transmitted to a single destination. Generally, the next hop egress of ECMP routing is determined by load balancing, which may be implemented based on a hash algorithm. With the rise of tunnel technology, ECMP routing also supports tunnel crossing gradually. Therefore, equal-cost egresses of ECMP routing include both local next hop egresses and remote tunnel next hop egresses. Generally, after a packet crosses a tunnel, a remote device may perform a routing query to find a real egress. For example, after the packet crosses a multi-protocol label switching (MPLS) tunnel, a virtual extensible local area network (VXLAN) tunnel, and a general routing encapsulation (GRE) tunnel, a route needs to be queried again at the remote end after tunnel decapsulation to find the remote route egress. Once a route needs to be queried, if the route found by the remote end is also an ECMP route, and egresses of the ECMP route are also local and remote tunnel egresses. In this case, especially in a symmetric network, after the ECMP route is queried, a remote tunnel egress may be selected for the packet due to a hash algorithm, and the packet may be forwarded back to the local end through the tunnel, causing a loop between the local end and the remote end. Regarding this problem, a technical solution is urgently needed to guarantee the ECMP effect and eliminate a loop in ECMP routing.

### SUMMARY

Embodiments of the present application provide a routing forwarding method, an electronic device, and a storage medium to implement the packet forwarding in equal-cost routing, avoiding the forwarding loop between a remote tunnel and a local end, reducing transmission path errors of network packets, improving network robustness, improving network communication quality, and improving user experience.

Embodiments of the present application provide a routing forwarding method. The method includes the following.

An input direction of a packet is determined.

In response to determining that the input direction is a tunnel side, an egress of the packet is set to a local egress.

The routing forwarding method provided in embodiments of the present application further includes in response to determining that the input direction is an access side, the egress of the packet is set to the local egress or a tunnel egress.

In the routing forwarding method provided in embodiments of the present application, that in response to determining that the input direction is the access side, the egress of the packet is set to the local egress includes the following.

In response to determining that the packet is received from the tunnel side, the egress of the packet is set to a destination address of the local egress according to a redirection entry in an access control list.

In the routing forwarding method provided in embodiments of the present application, the access control list comprises a destination address of at least one local egress.

In the routing forwarding method provided in embodiments of the present application, that in response to determining that the input direction is the access side, the egress of the packet is set to the local egress includes the following.

In response to determining that the packet is received from the tunnel side, a destination address of the local egress is determined in equal-cost multi-path information according to a preset hash factor, and the egress of the packet is set to the destination address.

In the routing forwarding method provided in embodiments of the present application, the preset hash factor is the number of local egresses.

In the routing forwarding method provided in embodiments of the present application, the local egress is located in a start position of the equal-cost multi-path information.

In the routing forwarding method provided in embodiments of the present application, that the destination address of the local egress is determined in the equal-cost multi-path information according to the preset hash factor includes the following.

The number of local egresses is acquired to serve as the preset hash factor.

A hash match is performed in the equal-cost multi-path information according to the number, and a network address of the local egress is taken as the destination address.

In the routing forwarding method provided in embodiments of the present application, that in response to determining that the input direction is the access side, the egress of the packet is set to the local egress or the tunnel egress includes the following.

In response to determining that the packet is received from the access side, a network address of the egress of the packet is determined according to equal-cost multi-path information, where the network address includes at least one of the local egress or the tunnel egress.

In the routing forwarding method provided in embodiments of the present application, equal-cost multi-path information used for forwarding a first packet at the access side is the same as equal-cost multi-path information used for forwarding a second packet at the tunnel side.

Embodiments of the present application further provide an electronic device. The electronic device includes one or more processors and a memory configured to store one or more programs. When executed by the one or more processors, the one or more programs cause the one or more processors to perform any method provided in embodiments of the present application.

Embodiments of the present application further provide a computer-readable storage medium for storing a computer program. When the computer program is executed by a processor, any method in embodiments of the present application is performed.

### BRIEF DESCRIPTION OF DRAWINGS

FIG. 1 is an example diagram of an equal-cost routing tunnel loop according to an embodiment of the present application.
FIG. 2 is a flowchart of a routing forwarding method according to an embodiment of the present application.
FIG. 3 is another flowchart of the routing forwarding method according to an embodiment of the present application.
FIG. 4 is another flowchart of the routing forwarding method according to an embodiment of the present application.
FIG. 5 is another flowchart of the routing forwarding method according to an embodiment of the present application.
FIG. 6 is an example diagram of the routing forwarding method according to an embodiment of the present application.
FIG. 7 is another example diagram of the routing forwarding method according to an embodiment of the present application.
FIG. 8 is a structural diagram of a routing forwarding apparatus according to an embodiment of the present application.
FIG. 9 is a structural diagram of an electronic device according to an embodiment of the present application.

### DETAILED DESCRIPTION

It is to be understood that the embodiments described herein are intended to explain the present application, not to limit the present application.

Suffixes such as "module", "component" or "unit" used for indicating elements in the subsequent description are used merely for facilitating the description of the present application and have no particular meaning in themselves. Therefore, "module", "component" or "unit" may be used in a mixed manner.

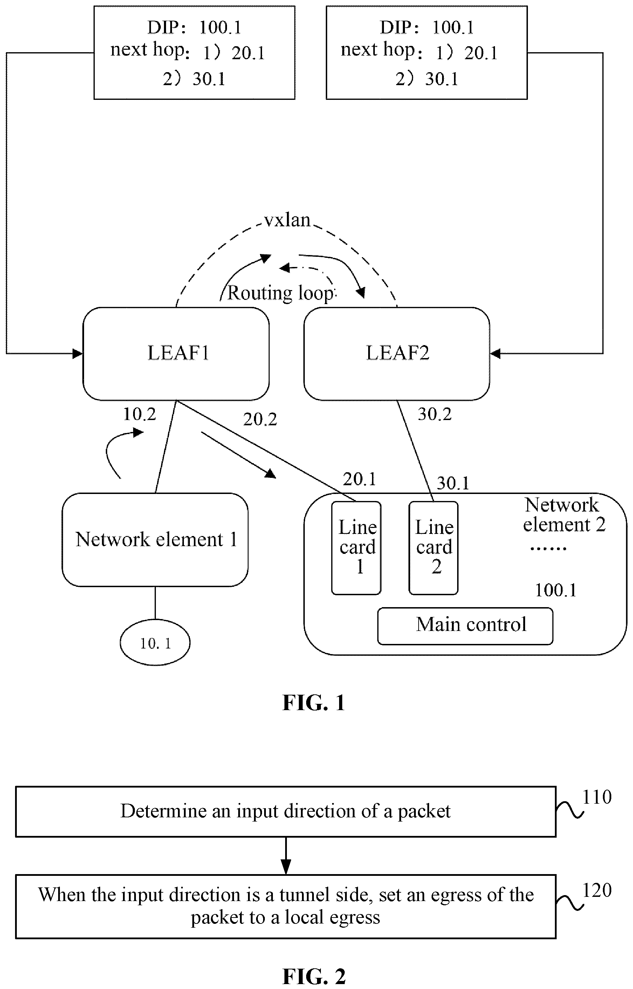

An embodiment of the present application provides an example of an equal-cost routing tunnel loop. Referring to FIG. 1, network element 1 communicates with network element 2. LEAF1 and LEAF2 form two next hops respectively. After traffic reaches LEAF1, no equal-cost routing tunnel loop occurs when an egress 20.1 for the traffic is matched by a hash match through the load balancing algorithm in ECMP routing, and the traffic needs to reach LEAF2 from a tunnel side when an egress 30.1 for the traffic is matched by a hash match through the load balancing algorithm. After the traffic reaches LEAF2, an egress needs to be selected based on load balancing algorithms in ECMP routing. When an egress 30.1 for the traffic is matched by a hash match, no equal-cost routing tunnel loop occurs. When an egress 20.1 for the traffic is matched by a hash match through load balancing algorithms, the traffic returns to LEAF1 through a tunnel. In this case, an equal-cost routing tunnel loop occurs, and the packet transmission path is wrong, making network robustness relatively poor.

FIG. 2 is a flowchart of a routing forwarding method according to an embodiment of the present application. This embodiment of the present application is applicable to the case of supporting tunnel transmission in ECMP routing. The method can be performed by a routing forwarding apparatus in an embodiment of the present application. The apparatus can be implemented through software and/or hardware and is generally integrated in a routing device. Referring to FIG. 2, the method provided in this embodiment of the present application specifically includes the steps below.

In step 110, an input direction of a packet is determined.

The input direction may be the direction where the packet enters a routing device. The input direction may include entering the routing device from an access side and entering the routing device from a tunnel side.

In this embodiment of the present application, the input direction of the packet may be identified. Further, packets with different input directions may also be classified. For example, packets with different input directions may be stored in different packet queues or provided with different flags. The manner for identifying the input direction of the packet may include detecting the attribute information of the packet in the routing device and determining the input direction through the attribute information. For example, when the packet includes the relevant configuration information of the tunnel, it is determined that the input direction of the packet is the tunnel side. When the packet does not include the relevant configuration information of the tunnel, it is determined that the input direction of the packet is the access side.

In step 120, when the input direction is the tunnel side, an egress of the packet is set to a local egress.

The local egress may be an egress of the local side of the routing device.

In this embodiment of the present application, when the input direction of the packet is the tunnel side, the egress of the packet is set to the local egress.

In this embodiment of the present application, the input direction of the packet is determined; and when the input direction is the tunnel side, the egress of the packet is set to the local egress. Therefore, the packet is prevented from being forwarded back to the local egress after being transmitted through an egress at the tunnel side so as to implement the packet forwarding in equal-cost routing, avoiding the forwarding loop between the remote tunnel and the local end, reducing transmission path errors of network packets, improving network robustness, improving network communication quality, and improving user experience.

In some embodiments, the method further includes when the input direction is the access side, the egress of the packet is set to the local egress or a tunnel egress.

In this embodiment of the present application, when the input direction of the packet is the access side, that is, when the packet enters the routing device from a device at the access side, the routing device may set the egress of the packet to a local egress or a tunnel egress.

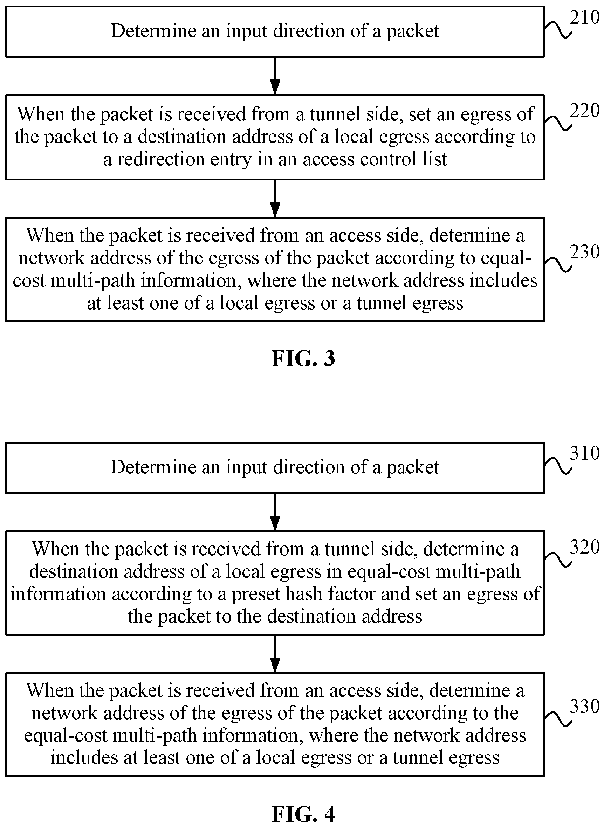

FIG. 3 is another flowchart of the routing forwarding method according to an embodiment of the present application. This embodiment of the present application is embodied based on the preceding embodiment of the present application. Referring to FIG. 3, the method provided in this embodiment of the present application includes the steps below.

In step 210, an input direction of a packet is determined.

In step 220, when the packet is received from a tunnel side, an egress of the packet is set to a destination address of a local egress according to a redirection entry in an access control list.

The access control list may filter the packet by a predefined rule. The access control list includes one or more redirection entries. Each redirection entry may point to one packet egress which may be a local egress or a tunnel egress.

In this embodiment of the present application, for the packet received from the tunnel side, a routing device may use the redirection entry in the access control list to set the egress of the packet to the destination address. The destination address is the local egress. It may be understood that the destination address may belong to the access control list. In an example embodiment, for the packet received from the tunnel side, the routing device may set the redirection entry that is in the access control list and belongs to the local egress of the packet.

In step 230, when the packet is received from an access side, a network address of the egress of the packet is determined according to equal-cost multi-path information, where the network address includes at least one of a local egress or a tunnel egress.

The equal-cost multi-path information may be the path information of multiple communication links that have the same overhead and reaches the destination address.

Specifically, for the packet received from the access side, the network address of the egress of the packet may be determined based on the equal-cost multi-path information. The network address may be the local egress of the routing device or the tunnel egress.

In an example embodiment, the access control list includes a destination address of at least one local egress.

In this embodiment of the present application, the access control list configured in the routing device regarding the packet from the tunnel side may be composed of the destination address of at least one local egress so that an egress of the packet from the tunnel side may be configured as the local egress.

FIG. 4 is another flowchart of the routing forwarding method according to an embodiment of the present application. This embodiment of the present application is embodied based on the preceding embodiments of the present application. Referring to FIG. 4, the method provided in this embodiment of the present application includes the steps below.

In step 310, an input direction of a packet is determined.

In step 320, when the packet is received from a tunnel side, a destination address of a local egress is determined in equal-cost multi-path information according to a preset hash factor, and an egress of the packet is set to the destination address.

The preset hash factor may be a preset parameter. The parameter is used for selecting the local egress in the equal-cost multi-path information. For example, the preset hash factor may enable a routing device to select merely the destination address of the local egress in the equal-cost multi-path information.

In this embodiment of the present application, the routing device may perform a hash match on the packet received from the tunnel side in the equal-cost multi-path information according to the preset hash factor so that the egress of the packet is set to the destination address of the local egress.

In step 330, when the packet is received from an access side, a network address of the egress of the packet is determined according to the equal-cost multi-path information, where the network address includes at least one of a local egress or a tunnel egress.

In some embodiments, the preset hash factor is the number of local egresses.

Specifically, the preset hash factor of the routing device may be set to the number of local egresses of the routing device. The number may be acquired through configuration information.

In some embodiments, the local egress is located in a start position of the equal-cost multi-path information.

In this embodiment of the present application, the equal-cost multi-path information may include a local egress and a tunnel egress. The local egress may be arranged before the tunnel egress so that the local egress is located in the start position of the equal-cost multi-path information.

In some other embodiments, the local egress is located in an end position of the equal-cost multi-path information.

Specifically, the equal-cost multi-path information may include the local egress and the tunnel egress. The local egress may be arranged after the tunnel egress so that the local egress is located in the end position of the equal-cost multi-path information.

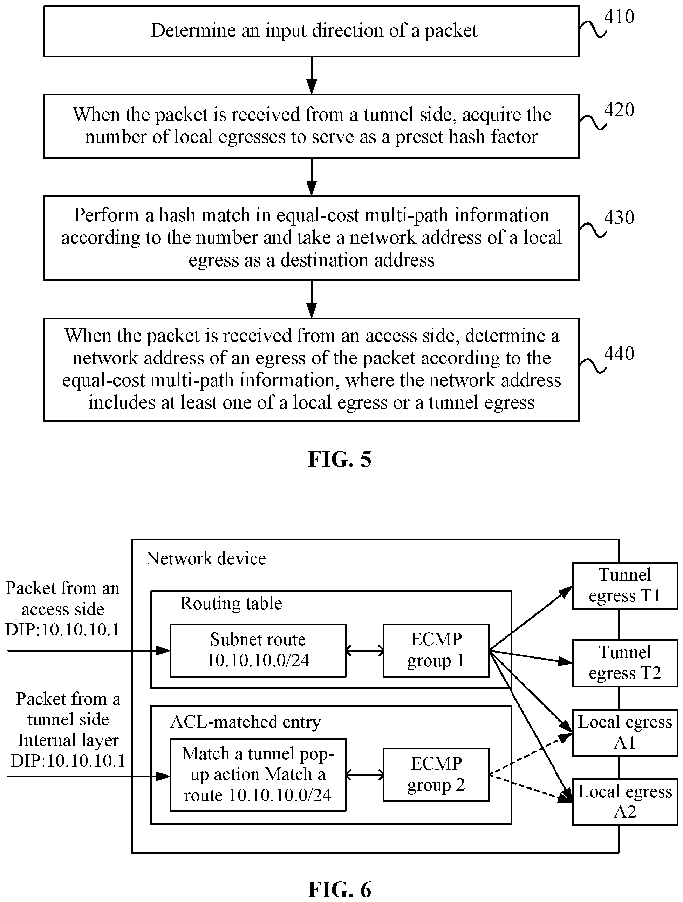

FIG. 5 is another flowchart of the routing forwarding method according to an embodiment of the present application. This embodiment of the present application is embodied based on the preceding embodiments of the present application. Referring to FIG. 5, the method provided in this embodiment of the present application includes the steps below.

In step 410, an input direction of a packet is determined.

In step 420, when the packet is received from a tunnel side, the number of local egresses is acquired to serve as a preset hash factor.

In this embodiment of the present application, a routing device receives the packet from the tunnel side and then reads the number of local egresses to serve as the preset hash factor.

In step 430, a hash match is performed in equal-cost multi-path information to obtain a network address of a local egress according to the number, and the network address of the local egress is taken as the destination address.

Specifically, the hash match may be performed in the multi-path information according to the number of preset hash factors so that the routing device acquires the network address of the local egress. The network address may be taken as the destination address of the packet so that an egress of the packet is set to the local egress. It may be understood that the network address of the local egress in the equal-cost multi-path information may be located in a start position or an end position. The hash match may be performed in the equal-cost multi-path information from the start position or the end position according to the number so that just a local egress in the start position or a local egress in the receiving position is matched for the routing device according to the number. In some embodiments, the location of a local egress is not limited to the start position of the equal-cost multi-path information or the end position of the equal-cost multi-path information. The position of a local egress in the equal-cost multi-path information may include the location of a local egress in the equal-cost multi-path information that facilitates the hash match performed by the routing device according to the number.

In step 440, when the packet is received from an access side, a network address of the egress of the packet is determined according to the equal-cost multi-path information, where the network address includes at least one of the local egress or a tunnel egress.

Further, on the basis of the preceding embodiments of the present application, the equal-cost multi-path information used for forwarding a first packet from the access side is the same as the equal-cost multi-path information used for forwarding a second packet from the tunnel side.

The first packet may be the packet received from the access side. The second packet may be the packet received from the tunnel side.

In this embodiment of the present application, one set of equal-cost multi-path information may be provided in the routing device. The equal-cost multi-path information includes tunnel egresses and local egresses. The equal-cost multi-path information may be used for setting a local egress of the second packet, a local egress of the first packet, and a tunnel egress of the first packet.

In an example embodiment, an ECMP query manner of the routing device may be modified. Instead of the previous ECMP query manners, an ECMP routing query table of the routing device may be divided into two different parts, a query for the access side and a query for the tunnel side. First, it is necessary to identify whether the packet enters the routing device from the access side or from the tunnel side. If the packet enters the device from the access side, a normal ECMP table query manner is used for processing. If the packet enters the device from the tunnel side, a manner in which the packet is sent to a local ECMP egress and no longer sent to an ECMP egress at the tunnel side is used for a query. After it is determined that the packet enters the routing device from the tunnel side and a packet in the ECMP routing table is queried, next hops at the tunnel side of ECMP routing may be completely hidden, and just one local next hop may be provided for forwarding the packet.

In an example embodiment, FIG. 6 is an example diagram of the routing forwarding method according to an embodiment of the present application. The access control list (ACL) technology is used for packet identification for a packet entering a routing device from a tunnel side, and an ECMP table query after the packet identification is completed through the ACL redirection technology. After calculating that ECMP routing includes local egresses and remote tunnel egresses, the routing device may deliver two sets of entries to hardware, with one set being a normal ECMP routing table and the other set being an ACL redirection ECMP table. In the normal ECMP table, all next hops are written, including local next hop egresses and remote tunnel next hop egresses. In ACL redirection ECMP egresses, only local next hop egresses are written. Moreover, an ACL-matched field is set to match a destination address after the tunnel pops up. The matching content is matched according to a subnet of a synchronously-delivered routing table and a mask of the synchronously-delivered routing table. In this case, two routing tables exist in the system regarding ECMP routing. One routing table is a normal subnet routing table. The other routing table is the same as the normal subnet routing table but is generated by ACL. Under normal circumstances, in the case of a packet from an access side, no tunnel pop-up action occurs; therefore, the packet is not matched according to the routing table generated by ACL but is directly forwarded, by querying the normal routing table, to normal ECMP routing egresses including remote tunnel next hops and local next hops. For a packet from a tunnel side, a tunnel pop-up action exists; therefore, the packet is matched according to the ACL redirection table and is redirected by ACL to the subnet and the mask that are the same as normal routing. However, the ECMP egresses just include local next hop egresses. In this case, an ECMP routing query for the tunnel side is completed, the packet is not sent to the tunnel side but just sent to the local side. For an ECMP routing query for the access side, packets are normally transmitted to the local side and the tunnel side to achieve the effect of load balancing transmission. Specifically, referring to FIG. 6, the routing forwarding method provided in this embodiment of the present application specifically includes the steps below.

It is assumed that one route 10.10.10.0/24 with an egress of ECMP exists in a device, where next hops 1.1.1.1/2.2.2.2 are local egresses, and tunnels tunnel1 and tunnel2 are tunnel egresses.

In the first case, ACL is combined with the ECMP group technology for processing.

1. The routing device delivers the route 10.10.10.0/24 with an egress of ECMP group 1. Four next hops are the local egresses 1.1.1.1/2.2.2.2 and the tunnel egresses tunnel1/tunnel2.

2. An ACL entry is synchronously formed to match the route 10.10.10.0/24 and match a tunnel pop-up action. The ACL behavior is redirected to an ECMP group 2. Next hop egresses included in the ECMP group 2 are local egresses 1.1. 1.1.1.1/2.2.2.2.

3. If the destination IP of a packet received by a local port is 10.10.10.1, the route 10.10.10.0/24 is queried directly due to a failure of matching the ACL tunnel pop-up action, and one egress is selected from the ECMP group 1 according to hash algorithms for sending the packet. The egress may be any local or tunnel next hop egress in the ECMP group 1.

4. If the packet is received from the tunnel tunnel1 and the destination IP address after a tunnel header pops up is 10.10.10.1, the ACL tunnel pop-up action is matched. Moreover, the 10.10.10.0/24 of ACL is matched, the packet is redirected to the ECMP group 2 according to the ACL action, and one egress is selected from the ECMP group 2 according to hash algorithms for sending the packet. Therefore, the egress of the packet can be only the local egress 1.1.1.1 or 2.2.2.2.

Through the preceding steps, the packet from the access side is queried according to normal routing and may be forwarded to an ECMP local egress or an ECMP tunnel egress in a load balance manner. The packet from the tunnel side after popping up the tunnel header hits an ACL redirection rule, and can be forwarded to an ECMP local egress in a load balance manner but cannot be sent to the tunnel side.

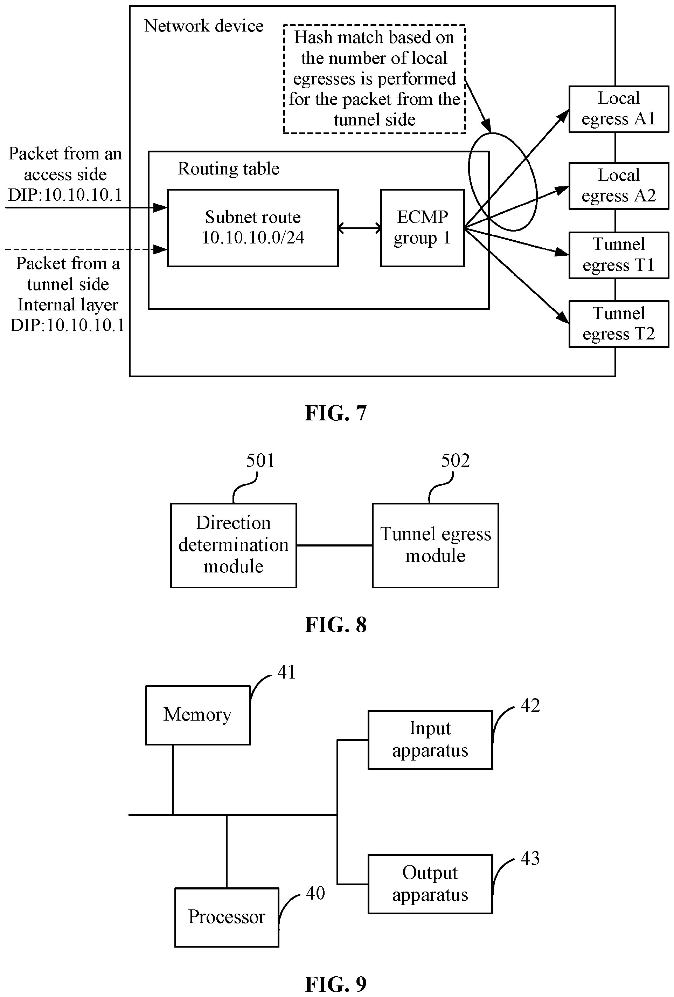

In another example embodiment, FIG. 7 is another example diagram of the routing forwarding method according to an embodiment of the present application. A routing device does not use two ECMP groups to distinguish table queries for an access side and a tunnel side but uses the ECMP hash algorithm effect of adjusting a terminated packet from the tunnel side for processing. First, next hops of an ECMP group are sorted, with local egresses in the front and tunnel egresses in the rear. Moreover, the number of local egresses is acquired to serve as one of the query attributes of an ECMP table. In this case, when the packet from the access side enters the ECMP routing table query process, a table query is performed according to the normal process, and the packet may be forwarded to all the ECMP next hops (including local next hops and tunnel next hops) in a load balance manner. When the packet from the tunnel side enters the ECMP routing table query process, the number of local egresses is taken as a modulo factor, and a modulo calculation is performed on the number of local interfaces during a hash calculation. In this case, the packet from the tunnel side must be forwarded to local next hops that match the number of local egresses and are sorted in the front in a load balance manner. Referring to FIG. 7, the routing forwarding method provided in this embodiment of the present application specifically includes the steps below.

1. The routing device delivers a route 10.10.10.0/24 with an egress of ECMP group 1. Four next hops are local egresses 1.1.1.1/2.2.2.2 and tunnel egresses tunnel1/tunnel2.

2. Next hops of the ECMP group 1 are sorted. The sorting result is 1.1.1.1/2.2.2.2/tunnel1/tunnel2. The next hops are written into a hardware table according to this sequence. Moreover, the number of normal next hops is 2.

3. If the destination IP of a packet received by a local port is 10.10.10.1, a normal route 10.10.10.0/24 is queried and it is found that the egress is the ECMP group 1. One egress is selected from the four next hops according to the result of a hash operation for forwarding. The egress may be a local egress or a tunnel egress.

4. If the packet is received from the tunnel tunnel1 and the destination IP address after a tunnel header pops up is 10.10.10.1, it is found after a route query that the egress is the ECMP group 1. Since the query is performed after the tunnel header pops up, the hash operation is performed together with a modulo operation with a modulo factor 2. The result of the hash operation is any value from 1 to 4, however, after a modulo operation with modulo factor 2 is performed on the result, the result must be only 1 or 2. Therefore, only the first two next hops, 1.1.1.1 and 2.2.2.2 can be selected for forwarding.

Through the preceding steps, the packet from the access side is queried according to normal routing and may be forwarded to an ECMP local egress or an ECMP tunnel egress in a load balance manner. Due to the existence of the modulo factor and the effect of sorting the ECMP next hops, only a local next hop can be queried out for forwarding the packet received from the tunnel side and popping up the tunnel header.

In some other embodiments, the routing forwarding method provided in embodiments of the present application may be replaced and combined with the two preceding methods. For example, after ACL is used for determination, a modified hash algorithm is used for matching a local egress. Alternatively, in an ECMP table query for the tunnel side, only the other ECMP table including local egresses is queried. In the present application, it is determined whether the source of a packet is the access side or the tunnel side. As for performing ECMP forwarding for the packet received from the tunnel side, next hop egresses at the tunnel side are hidden so that the packet is forwarded only to a local next hop, eliminating networking risk in the network, reducing transmission path errors of network packets, improving network robustness, improving network communication quality, and improving user experience.

FIG. 8 is a structural diagram of a routing forwarding apparatus according to an embodiment of the present application. The apparatus may perform the routing forwarding method provided in any embodiment of the present application and has function modules and effects corresponding to the method performed. The apparatus may be implemented by software and/or hardware and is generally integrated in a routing device. Referring to FIG. 8, the apparatus specifically includes a direction determination module 501 and a local egress module 502.

The direction determination module 501 is configured to determine an input direction of a packet.

The tunnel egress module 502 is configured to set an egress of the packet to a local egress when the input direction is a tunnel side.

In this embodiment of the present application, the direction determination module determines the input direction of the packet; and the tunnel egress module sets the egress of the packet, with the input direction being the tunnel side, to the local egress Therefore, the packet is prevented from being forwarded back to the local egress after being transmitted through an egress at the tunnel side so as to implement the packet forwarding in equal-cost routing, avoiding the forwarding loop between the remote tunnel and the local end, reducing transmission path errors of network packets, improving network robustness, improving network communication quality, and improving user experience.

In some embodiments, the routing forwarding apparatus further includes a local egress module configured to set the egress of the packet to the local egress or a tunnel egress when the input direction is an access side.

In some embodiments, the tunnel egress module 502 is specifically configured to set the egress of the packet to a destination address of the local egress according to a redirection entry in an access control list when the packet is received from the tunnel side.

In some embodiments, the access control list in the apparatus includes a destination address of at least one local egress.

In some other embodiments, the tunnel egress module 502 is further specifically configured to determine the destination address of the local egress in equal-cost multi-path information according to a preset hash factor and set the egress of the packet to the destination address when the packet is received from the tunnel side.

In some other embodiments, the preset hash factor in the apparatus is the number of local egresses.

In some other embodiments, the local egress in the apparatus is located in a start position of the equal-cost multi-path information.

In some embodiments, the tunnel egress module 502 is further specifically configured to acquire the number of local egresses to serve as the preset hash factor, perform a hash match in the equal-cost multi-path information according to the number, and take a network address of the local egress as the destination address.

In some other embodiments, the local egress module is specifically configured to determine a network address of the egress of the packet according to the equal-cost multi-path information when the packet is received from the access side, where the network address includes at least one of the local egress or the tunnel egress.

In some other embodiments, in the apparatus, the equal-cost multi-path information used for forwarding a first packet from the access side is the same as the equal-cost multi-path information used for forwarding a second packet from the tunnel side.

FIG. 9 is a structural diagram of an electronic device according to an embodiment of the present application. The electronic device includes a processor 40, a memory 41, an input apparatus 42, and an output apparatus 43. One or more processors 40 may be included in the electronic device. One processor 40 is shown as an example in FIG. 9. The processor 40, the memory 41, the input apparatus 42, and the output apparatus 13 in the electronic device may be connected via a bus or in other manners. The connection via a bus is shown as an example in FIG. 9.

As a computer-readable storage medium, the memory 41 may be configured to store software programs, computer executable programs, and modules, for example, modules (the direction determination module 501 and the local egress module 502) corresponding to the routing forwarding apparatus in embodiments of the present application. The processor 40 executes software programs, instructions, and modules stored in the memory 41 to perform function applications and data processing of the electronic device, that is, to perform the preceding routing forwarding method.

The memory 41 may mainly include a program storage region and a data storage region. The program storage region may store an operating system and an application program required by at least one function. The data storage region may store data created based on the use of the electronic device. Additionally, the memory 41 may include a high-speed random-access memory and may also include a nonvolatile memory, such as at least one magnetic disk memory, a flash memory, or another nonvolatile solid-state memory. In some examples, the memory 41 may further include a memory remotely disposed with respect to the processor 40. These remote memories may be connected to the electronic device via a network. Examples of the preceding network include, but are not limited to, the Internet, an intranet, a local area network, a mobile communication network and a combination thereof.

The input apparatus 42 may be configured to receive inputted digital or character information and generate key signal input related to user settings and function control of the electronic device. The output apparatus 43 may include a display device such as a display screen.

An embodiment of the present application further provides a storage medium including computer-executable instructions. When executed by a computer processor, the computer-executable instructions are used for causing the computer processor to perform a routing forwarding method. The method includes the following.

An input direction of a packet is determined.

When the input direction is a tunnel side, an egress of the packet is set to a local egress.

From the preceding description of implementations, it is apparent to those skilled in the art that the present application may be implemented by use of software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules that are included in the embodiment of the apparatus are merely divided according to functional logic, and the division is not limited to this as long as the corresponding functions can be performed. Additionally, the specific names of function units are merely intended for distinguishing between each other and are not to limit the scope of the present application.

It is to be understood by those having ordinary skill in the art that some or all steps of the preceding method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media include volatile and nonvolatile media as well as removable and non-removable media implemented in any method or technology for storing information (such as computer-readable instructions, data structures, program modules or other data). The computer storage media include, but are not limited to, a random-access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storages, a magnetic cassette, a magnetic tape, a magnetic disk or other magnetic storage devices, or any other medium that can be used for storing desired information and can be accessed by a computer. Additionally, as is known to those having ordinary skill in the art, the communication media generally include computer-readable instructions, data structures, program modules or other data in carriers or in modulated data signals transported in other transport mechanisms and may include any information delivery medium.

## Claims

1. A routing forwarding method, comprising:
determining an input direction of a packet; and
in response to determining that the input direction is a tunnel side, setting an egress of the packet to a local egress.

2. The method according to claim 1, further comprising: in response to determining that the input direction is an access side, setting the egress of the packet to a local egress or a tunnel egress.

3. The method according to claim 1, wherein in response to determining that the input direction is the tunnel side, setting the egress of the packet to the local egress comprises:
in response to determining that the packet is received from the tunnel side, setting the egress of the packet to a destination address of the local egress according to a redirection entry in an access control list.

4. The method according to claim 3, wherein the access control list comprises a destination address of at least one local egress.

5. The method according to claim 1, wherein in response to determining that the input direction is the tunnel side, setting the egress of the packet to the local egress comprises:
in response to determining that the packet is received from the tunnel side, determining a destination address of the local egress in equal-cost multi-path information according to a preset hash factor and setting the egress of the packet to the destination address.

6. The method according to claim 5, wherein the preset hash factor is a number of local egresses.

7. The method according to claim 5, wherein the local egress is located in a start position of the equal-cost multi-path information.

8. The method according to claim 5, wherein determining the destination address of the local egress in the equal-cost multi-path information according to the preset hash factor comprises:
acquiring a number of local egresses to serve as the preset hash factor; and
performing a hash match in the equal-cost multi-path information according to the number and taking a network address of the local egress as the destination address.

9. The method according to claim 2, wherein in response to determining that the input direction is the access side, setting the egress of the packet to the local egress or the tunnel egress comprises:
in response to determining that the packet is received from the access side, determining a network address of the egress of the packet according to equal-cost multi-path information, wherein the network address comprises at least one of the local egress or the tunnel egress.

10. The method according to claim 5 or 9, wherein equal-cost multi-path information used for forwarding a first packet from the access side is the same as equal-cost multi-path information used for forwarding a second packet from the tunnel side.

11. An electronic device, comprising:
one or more processors; and
a memory configured to store one or more programs, wherein when executed by the one or more processors, the one or more programs cause the one or more processors to the method according to any one of claims 1 to 10.

12. A computer-readable storage medium for storing a computer program, wherein when the computer program is executed by a processor, the computer program causes the processor to the method according to any one of claims 1-10.
